# EUROPEAN PATENT APPLICATION

(11) **EP 1 898 222 A1**
(43) Date of publication of application: **12.03.2008**
(21) Application number: 06767058.8
(22) Date of filing: 21.06.2006
(51) Int. Cl.: G01N 35/08, G01N 1/04, G01N 15/14, G01N 27/04, G01N 33/49, G01N 33/68, G01N 33/72, G01N 37/00, G01N 1/10

(54) **CARTRIDGE**

(30) Priority: 24.06.2005 JP 2005185264; 06.09.2005 JP 2005258173
(71) Applicant: Arkray, Inc., Kyoto-shi, Kyoto 601-8045 (JP)
(72) Inventor: NODA, Yuichiro. c/o ARKRAY Inc., Kyoto-shi, Kyoto 601-8045 (JP); MATSUMOTO, Daisuke, c/o ARKRAY Inc., Kyoto-shi, Kyoto 601-8045 (JP); SHIRAKI, Yasunori, c/o ARKRAY Inc., Kyoto-shi, Kyoto 601-8045 (JP)
(74) Representative: Pluckrose, Anthony William
(86) International application number: PCT/JP2006/312399
(87) International publication number: WO 2006/137431

(57) **Abstract**

A cartridge A to be mounted to a separate apparatus is provided. The cartridge includes a liquid introduction port 3 for introducing a sample liquid, and a diluter 4 including a diluent tank 41 for storing a diluent 40 for diluting the sample liquid, a sample liquid measurer 43 for separating a predetermined amount of sample liquid from the sample liquid introduced from the liquid introduction port 3, and a dilution tank 42A for mixing at least part of the sample liquid and at least part of the diluent. The sample liquid measurer 4 includes an introduction flow path 43a extending from the liquid introduction port 3, and a measurement flow path 43c and an overflow path 43d which are connected to the introduction flow path 43a via a branch portion 43b. The measurement flow path 43c extends toward the dilution tank 42A.

## Description

### TECHNICAL FIELD

The present invention relates to an analyzer cartridge to be mounted to an analyzer for analyzing a particular component in e.g. blood and particularly relates to a disposable cartridge.

### BACKGROUND ART

To analyse a particular component in blood is an effective way to check the condition of a human body or cure a particular disease. Examples of blood analyzer used for such purposes include a blood cell counter for counting red blood cells or white blood cells contained in blood.

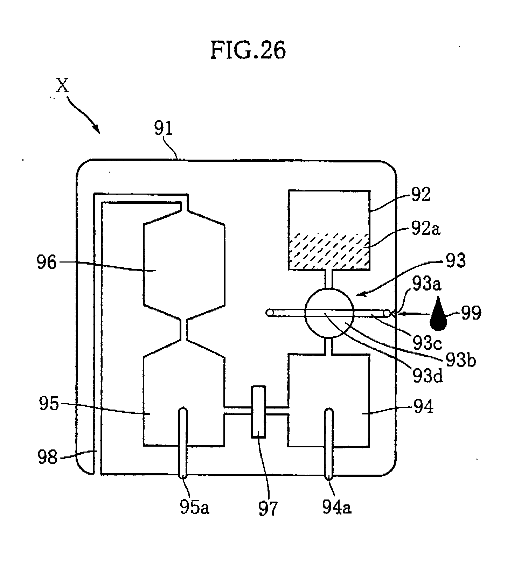

Fig. 26 shows an example of conventional cartridge to be mounted to a blood cell counter. The cartridge X shown in the figure includes a main body 91, a diluent tank 92, an introduction portion 93, a dilution tank 94, a storage tank 95, a measurement tank 96 and a suction port 98. When blood 99 is introduced into the introduction port 93a, the flow paths 93c and 93d are filled with the blood due to the capillary action. In this state, when the rotary member 93b is rotated through 90°, the portion of the blood 99 located in the flow path 93d is separated. Then, when suction from the suction port 98 is performed, the diluent 92a in the diluent tank 92 and the blood 99 in the flow path 93d are supplied to the dilution tank 94. In the process of supply into the dilution tank 94, the diluent 92a and the blood 99 are mixed. Thus, diluted blood sample is provided in the dilution tank 94. A partition wall 97 formed with a minute hole is provided between the dilution tank 94 and the storage tank 95. By continuing suction from the suction port 98, the blood sample contained in the dilution tank 94 flows into the storage tank 95 through the minute hole. The dilution tank 94 and the storage tank 95 are provided with electrodes 94a and 95a, respectively. The resistance between the electrodes 94a and 95a is monitored during when the blood sample flows through the minute hole. For instance, since red blood cells are an insulator, the resistance drops each time a red blood cell passes through the minute hole. By counting the number of times the resistance drops, the red blood cells contained in the blood sample is counted. The blood sample then flows from the storage tank 95 to the measurement tank 96. A flow measurer (not shown) utilizing electrical or optical means is provided in front of and behind the measurement tank 96 in the flow direction. The flow measurer determines the amount of the measured blood sample. The number of red blood cells in the blood 99 is determined by the above-described process. The cartridge X has a relatively simple structure and is structured as a disposable cartridge which is usable only once.

However, the counting of blood cells with a blood cell counter utilizing the cartridge X has the following problems.

In the introduction portion 93, the blood 99 is measured by rotating the rotary member 93b. The rotary member 93b needs to be separate from the main body 91 and sealed hermetically without forming a clearance between the main body 91. This is because the leakage of blood 99 may deteriorate the hygienic condition as well as the analysis accuracy. However, to manufacture such a rotary member 93b is difficult and complicates the manufacturing process of the cartridge X. Further, it is difficult to rotate the rotary member 93b by a driving means provided outside the cartridge X without liquid leakage.

Further, since the diluent 92a and the blood 99 are merely supplied collectively into the dilution tank 94, the diluent 92a and the blood 99 may not be mixed sufficiently. For instance, when blood cell components are positioned locally at a corner of the dilution tank 94, the blood cell components are not properly supplied to the storage tank 95. In such a case, the accuracy of the counting of red blood cells is deteriorated.

Patent Document 1: W/O 03/104771

### DISCLOSURE OF THE INVENTION

### Problems to be Solved by the Invention:

The present invention is proposed under the above-described circumstances. It is, therefore, an object of the present invention to provide a cartridge which is suitable for use as a disposable cartridge and capable of diluting a sample easily and precisely.

### Means for Solving the Problems:

To solve the above-described problems, the present invention takes the following technical measures.

According to the present invention, there is provided a cartridge to be mounted to a separate apparatus. The cartridge comprises a liquid introduction port for introducing a sample liquid, and a diluter including a diluent tank for storing a diluent for diluting the sample liquid, a sample liquid measurer for separating a predetermined amount of sample liquid from the sample liquid introduced from the liquid introduction port, and at least one dilution tank for mixing at least part of the sample liquid and at least part of the diluent. The sample liquid measurer includes an introduction flow path extending from the liquid introduction port, and a measurement flow path and an overflow path which are connected to the introduction flow path via a branch portion. The measurement flow path extends toward the dilution tank.

In a preferred embodiment of the present invention, the dilution tank incorporates a stirrer.

In a preferred embodiment of the present invention, an orifice intervenes between the measurement flow path and the dilution tank.

In a preferred embodiment of the present invention, at least part of the overflow path extending from the branch portion and having a length corresponding to the length of the measurement flow path has a cross-sectional area which is equal to or smaller than the cross-sectional area of the measurement flow path.

In a preferred embodiment of the present invention, the diluter includes a diluent measurer for separating a predetermined amount from the diluent stored in the diluent tank.

In a preferred embodiment of the present invention, the diluent measurer includes a measurement flow path including a large cross-sectional portion and a pair of tapered portions connected to opposite ends of the large cross-sectional portion in a flow direction.

In a preferred embodiment of the present invention, the diluter includes a first and a second dilution tanks. The first dilution tank is connected to a flow path through which the sample liquid introduced from the liquid introduction port flows in and a flow path through which the diluent from the diluent tank flows in. The second dilution tank is connected to a flow path through which the sample liquid diluted in the first dilution tank flows in and a flow path through which the diluent from the diluent tank flows in.

In a preferred embodiment of the present invention, the cartridge further comprises a buffer tank arranged downstream from the first dilution tank. A dry hemolytic agent is applied to the buffer tank.

In a preferred embodiment of the present invention, the cartridge further comprises at least one analysis portion for analyzing a particular component contained in the sample liquid diluted by the diluter. Thus, the cartridge serves as an analyzer cartridge to be mounted to an analyzer for analyzing the particular component contained in the sample liquid.

In a preferred embodiment of the present invention, the cartridge further comprises at least one storage for storing the diluted sample liquid after the analysis.

In a preferred embodiment of the present invention, the cartridge includes a first analysis portion for analyzing the sample liquid diluted in the first dilution tank and a second analysis portion for analyzing the sample liquid diluted in the second dilution tank.

In a preferred embodiment of the present invention, the cartridge further comprises a flow measuring unit for measuring the amount of the diluted sample liquid passed through the analysis portion.

In a preferred embodiment of the present invention, the flow measuring unit includes a meandering flow path and at least two diluted-sample-liquid detectors arranged in the meandering flow path at positions spaced from each other in the flow direction.

In a preferred embodiment of the present invention, the diluted-sample-liquid detectors include an electrode.

In a preferred embodiment of the present invention, the meandering flow path serves as the storage.

In a preferred embodiment of the present invention, the analysis portion includes an electrical resistance type analysis portion including a hole and a pair of electrodes spaced from each other via the hole.

In a preferred embodiment of the present invention, the analysis portion includes an optical analysis portion including a reflection film, a light transmitting portion and a reagent applied to the reflection film or the light transmitting portion.

In a preferred embodiment of the present invention, flow paths through which the sample liquid and the diluted sample liquid flow comprise a hydrophobic surface having a contact angle with water of not less than 60 degrees.

In a preferred embodiment of the present invention, the flow paths include one in which width/depth is not less than one and not more than five.

In a preferred embodiment of the present invention, the cartridge further comprises a main body and a printed wiring board bonded to the main body. The main body is formed with a plurality of recesses or grooves. The recesses or grooves are covered by the printed wiring board to form a plurality of flow paths or tanks.

In a preferred embodiment of the present invention, the cartridge further comprises a main body including a plurality of recesses or grooves, an electrode integrally formed in the main body by insert molding to be exposed at the recesses or the grooves, and a cover bonded to the main body. The recesses or grooves are covered by the cover to form a plurality of flow paths or tanks.

In a preferred embodiment of the present invention, the sample liquid is blood.

In a preferred embodiment of the present invention, the particular component is blood cells such as red blood cells, white blood cells or blood platelets.

In a preferred embodiment of the present invention, the particular component is hemoglobin or C-reactive protein.

Other features and advantages of the present invention will become more apparent from the detailed description given below with reference to the accompanying drawings.

### BRIEF DESCRIPTION OF THE DRAWINGS

Fig. 1 is an overall plan view showing an example of cartridge according to the present invention.
Fig. 2 is an overall perspective view showing an example of cartridge according to the present invention.
Fig. 3 is a plan view showing a principal portion of a measurement flow path of a cartridge according to the present invention.
Fig. 4 is a sectional view of the principal portion taken along lines IV-IV in Fig. 3.
Fig. 5 is a plan view showing an electrical resistance type analysis portion in an example of cartridge according to the present invention.
Fig. 6 is a sectional view of a principal portion taken along lines VI-VI in Fig. 3.
Fig. 7 is a plan view showing an optical analysis portion of an example of cartridge according to the present invention.
Fig. 8 is a sectional view showing a principal portion taken along lines VIII-VIII in Fig. 7.
Fig. 9 is a plan view showing a principal portion of an example of cartridge according to the present invention in a state in which blood is introduced in the blood measurement process.
Fig. 10 is a plan view showing a principal portion of an example of cartridge according to the present invention in a state in which the measurement flow path is filled in the blood measurement process.
Fig. 11 is a plan view showing a principal portion of an example of cartridge according to the present invention in a state in which blood is continuously introduced into an overflow path in the blood measurement process.
Fig. 12 is a plan view showing a principal portion of an example of cartridge according to the present invention in a state in which blood in the measurement flow path is separated in the blood measurement process.
Fig. 13 is a plan view showing a principal portion of an example of cartridge according to the present invention in a state in which blood is supplied into a first dilution tank in the blood measurement process.
Fig. 14 is a plan view showing a principal portion of an example of cartridge according to the present invention in a state to start the diluent measurement.
Fig. 15 is a plan view showing a principal portion of an example of cartridge according to the present invention in a state in which diluent is introduced in the diluent measurement process.
Fig. 16 is a plan view showing a principal portion of an example of cartridge according to the present invention in a state in which diluent is continuously introduced into the measurement flow path in the diluent measurement process.
Fig. 17 is a plan view showing a principal portion of an example of cartridge according to the present invention in a state in which the measurement flow path is filled in the diluent measurement process.
Fig. 18 is a plan view showing a principal portion of an example of cartridge according to the present invention in a state in which diluent is supplied into the first dilution tank in the diluent measurement process.
Fig. 19 is a plan view showing a principal portion of an example of cartridge according to the present invention in the initial state of the blood cell counting process.
Fig. 20 is a sectional view showing a principal portion taken along lines XX-XX in Fig. 19.
Fig. 21 is a plan view showing a principal portion of an example of cartridge according to the present invention in a state in which blood sample has reached a first analysis portion in the blood cell counting process.
Fig. 22 is a plan view showing a principal portion of an example of cartridge according to the present invention in a state to start the blood cell counting process.
Fig. 23 is a plan view showing a principal portion of an example of cartridge according to the present invention in a state in which the front of the blood sample has reached the second electrode from the upstream side in the blood cell counting process.
Fig. 24 is a plan view showing a principal portion of an example of cartridge according to the present invention in a state in which the front of the blood sample has reached the electrode on the most downstream side in the blood cell counting process.
Fig. 25 is a sectional view showing a principal portion of a variation of a cartridge according to the present invention.
Fig. 26 is an overall perspective view showing an example of conventional cartridge.

### BEST MODE FOR CARRYING OUT THE INVENTION

Preferred embodiments of the present invention will be described below with reference to the accompanying drawings.

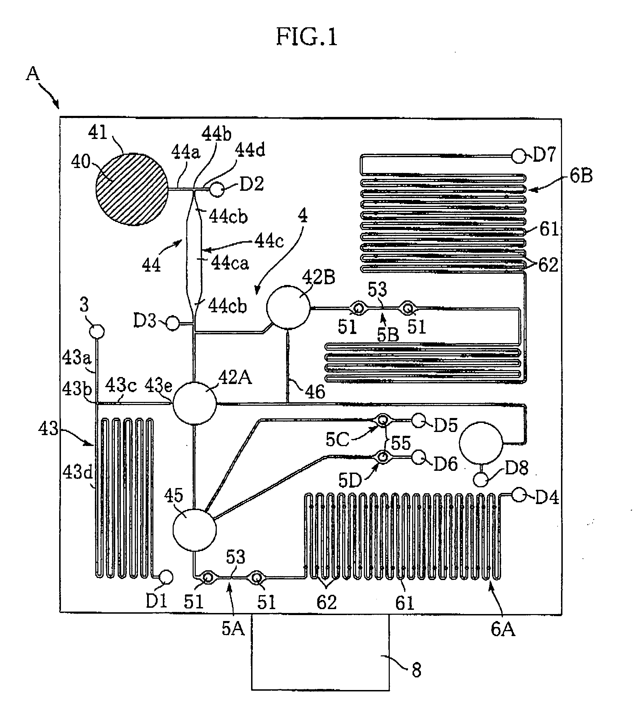

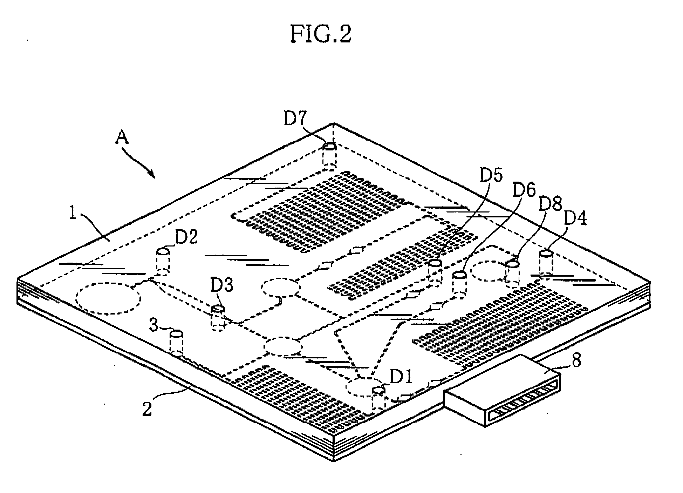

Figs. 1 and 2 show an example of cartridge according to the present invention. The illustrated cartridge A includes a main body 1, a printed wiring board 2 bonded to the main body, a liquid introduction port 3, a diluter 4, a plurality of analysis portions 5A, 5B, 5C and 5D and two flow measuring units 6A and 6B. The cartridge is a disposable type analyzer cartridge to be mounted to a non-illustrated analyzer.

The main body 1 comprises a flat rectangular plate made of a transparent resin such as an acrylic resin. The lower surface of the main body 1 in Fig. 2 is formed with a plurality of recesses or grooves for forming flow paths or tanks, which will be described later. In this embodiment, the main body 1 is about 70 mm square and has a thickness of about 3 mm.

The printed wiring board 2 is formed by laminating a plurality of substrates made of e.g. an epoxy resin. A wiring pattern made of e.g. a copper foil is provided between the substrates. The printed wiring board 2 is formed with a plurality of electrodes 51 and 62, which will be described later. These electrodes 51 and 62 have a through-hole structure. A connector 8 is provided at an extension of the printed wiring board 2. The connector 8 is used for connecting the cartridge A to an analyzer such as a blood cell counter (not shown). The main body 1 and the printed wiring board 2 are liquid-tightly bonded to each other with e.g. an adhesive. The main body 1 and the printed circuit board 2 have a hydrophobic surface having a contact angle with water of not less than 60 degrees at least at portions forming the flow paths, which will be described later.

The liquid introduction port 3 is provided for introducing blood to be analyzed into the cartridge A. The liquid introduction port 3 comprises a through-hole formed in the main body 1 and has a diameter of about 3 mm.

The diluter 4 is provided for diluting the blood introduced from the liquid introduction port 3 to a concentration suitable for various kinds of analysis. The diluter includes a diluent tank 41, a first and a second dilution tanks 42A, 42B, a blood measurer 43 and a diluent measurer 44. The diluter 4 of this embodiment is designed to perform two-stage dilution using the first and the second dilution tanks 42A and 42B, which will be described later.

The diluent tank 41 is provided for storing diluent 40 for diluting blood in the cartridge A. The diluent tank 41 has a diameter of about 12 mm and a depth of about 2 mm and is capable of storing about 200 µL of diluent 40. As the diluent 40, physiological salt solution may be used, for example. To store the diluent 40 in the diluent tank 41, use may be made of an aluminum bag having a shape conforming to the inner surface of the diluent tank 41.

The blood measurer 43 is arranged between the blood introduction port 3 and the first dilution tank 42A and includes an introduction flow path 43a, a measurement flow path 43c, and an overflow path 43d. The introduction flow path 43a is used for introducing blood from the liquid introduction port 3. The introduction flow path has a width of about 250 µm and a depth of 250 µm, so that the width/depth is one. Unless otherwise described, each of the flow paths described below has the same width and depth as those of the introduction flow path 43a. To achieve uniform flow in each of the flow paths, it is preferable that the width/depth is not more than five. The measurement flow path 43c and the overflow path 43d extend from the introduction flow path 43a via a branch portion 43b. The measurement flowpath 43c is used for temporarily retaining blood by the amount suitable for the analysis. The measurement flow path 43c has a length of about 8 mm and a volume of about 0.5 µL. An orifice 43e is provided between the measurement flow path 43c and the first dilution tank 42A. The orifice 43e has a width of about 50 µm and serves to increase the pressure drop resistance from the measurement flow path 43c to the first dilution tank 42A. The overflow path 43d is a meandering path and connected to a drain D1. The cross-sectional area of the overflow path 43d is equal to or smaller than that of the measurement flow path 43c.

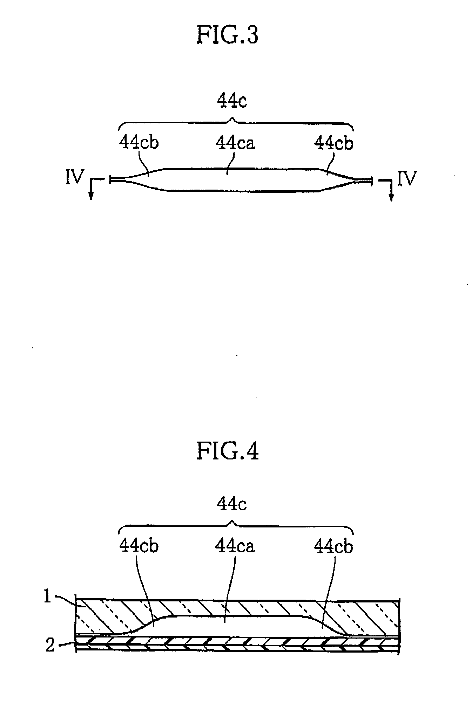

The diluent measurer 44 is arranged downstream from the diluent tank 41 and connected to the first and the second dilution tanks 42A and 42B. The diluent measurer 44 includes an introduction flow path 44a, a measurement flow path 44c, and an overflow path 44d. The introduction flow path 44a is utilized for introducing the diluent 40 from the diluent tank 41. The measurement flow path 44c and the overflow path 44d extend from the introduction flow path 44a via a branch portion 44b. The measurement flow path 44c is used for temporarily retaining the diluent 40 by a precise amount suitable for diluting the blood to a predetermined concentration. As shown in Figs. 3 and 4, the measurement flow path 44c includes a large cross-sectional portion 44ca and two tapered portions 44cb. The large cross-sectional portion 44ca has a width of about 2 mm and a depth of about 2 mm, and the volume is about 50 µL. The two tapered portions 44cb are connected respectively to the front end and the rear end of the large cross-sectional portion 44ca and prevent the flow of the diluent 40 into and out of the large cross-sectional portion 44ca from being disturbed. As shown in Figs. 1 and 2, the overflow path 44d is connected to a drain D2.

Both of the first and the second dilution tanks 42A and 42B are used for diluting blood and have a diameter of about 6 mm, a depth of about 2 mm and a volume of not less than 50 µL. The first dilution tank 42A is connected to the blood measurer 43 and the diluent measurer 44. The blood measured by the blood measurer 43 is diluted in the first dilution tank 42A with the diluent 40 measured by the diluent measurer 44. The second dilution tank 42B is connected to the first dilution tank 42A and the diluent measurer 44. The blood sample diluted in the first dilution tank 42A is diluted in the second dilution tank 42B with the diluent 40 measured by the diluent measurer 44. A measurement flow path 46 is provided between the first dilution tank 42A and the second dilution tank 42B. Since the ratio of dilution in the first dilution tank 42A and that in the second dilution tank 42B are equal in this embodiment, the measurement flow path 46 has the same size as that of the measurement flow path 43c.

The analysis portions 5A, 5B, 5C and 5D are portions to perform the analysis of a particular component in the blood. The first and the second analysis portions 5A and 5B are designed to perform the analysis by electrical resistance measurement. The first analysis portion 5A is for white blood cells, whereas the second analysis portion 5B is for red blood cells. The third and the fourth analysis portions 5C and 5D are designed to perform analysis by an optical method. The third analysis portion 5C is for Hb, whereas the fourth analysis portion is for CRP.

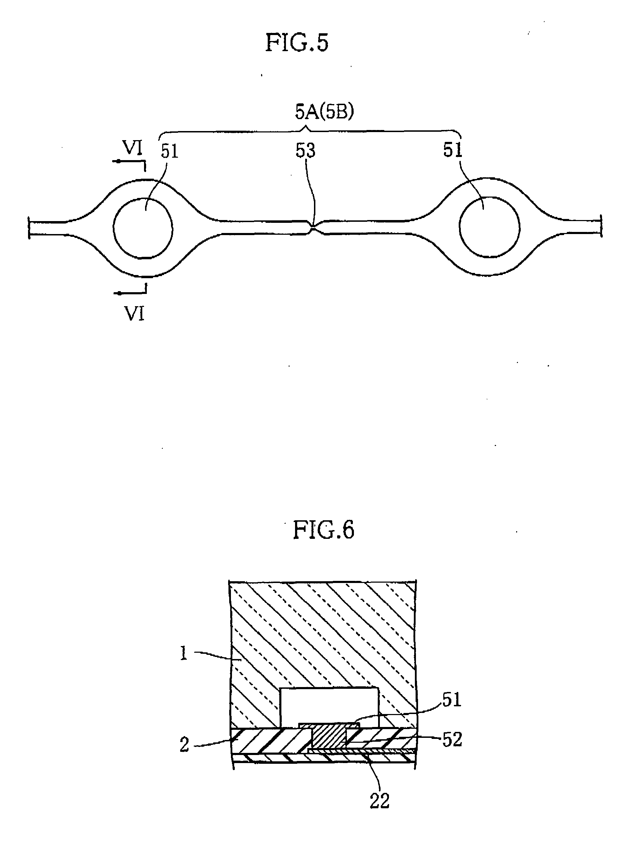

The first analysis portion 5A is connected to the first dilution tank 42A via a buffer tank 45. The white blood cells are counted in the first analysis portion 5A by using the blood sample diluted in the first dilution tank 42A. As shown in Figs. 5 and 6, the first analysis portion 5A includes a minute hole 53 and a pair of electrodes 51 arranged on the opposite sides of the minute hole 53 to perform the analysis by electrical resistance measurement. While the width of the flow path on the opposite sides of the minute hole 53 is about 250 µm, the minute hole 53 has a relatively small width of about 50 µm. This width is so determined that the electrical resistance between the paired electrodes 51 changes considerably when a white blood cell passes through the minute hole. The flow path includes portions enlarged into a generally circular shape on the opposite sides of the minute hole 53, at which the paired electrodes 51 are provided. The paired electrodes 51 are formed by printing using one or a plurality of materials selected from the group consisting of gold, platinum, palladium and carbon, for example. As shown in Fig. 6, each of the electrodes 51 is electrically connected to a wiring pattern 22 via a through-hole 52. The through-hole 52 and the wiring pattern 22 may be made of copper.

The second analysis portion 5B is connected to the second dilution tank 42B. The red blood cells are counted in the second analysis portion 5B by using the blood sample after the second dilution in the second dilution tank 42B. The structure of the second analysis portion 5B is substantially the same as that of the first analysis portion described with reference to Figs. 5 and 6.

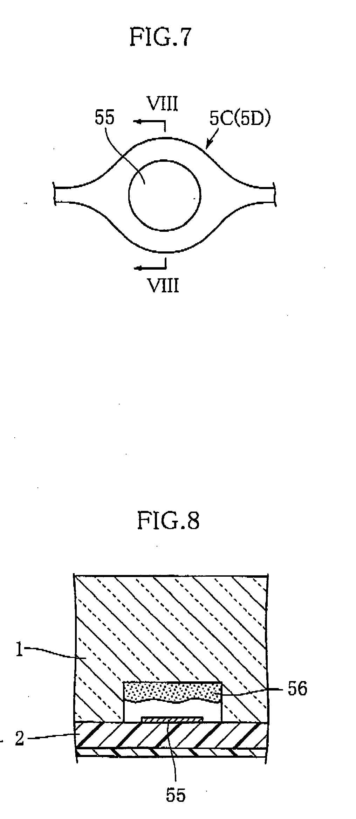

Each of the third and the fourth analysis portions 5C and 5D is independently connected to the buffer tank 45. As shown in Figs. 7 and 8, each of the third and the fourth analysis portions 5C and 5D includes a reflection film 55 provided at a portion of the flow path enlarged into a generally circular shape. The third and the fourth analysis portions are designed to measure Hb and CRP, respectively, by an optical method. The reflection films 55 are formed collectively with the electrodes 51 by printing using one or a plurality of materials selected from the group consisting of gold, platinum and palladium, for example. As shown in Fig. 8, a reagent 56 is applied to the upper surface of the enlarged portion of the flow path. By mixing the blood sample with the reagent 56, the measurement of Hb or CRP by an optical method is performed. In this embodiment, light impinges on the third and the fourth analysis portions 5C and 5D through the main body 1, which is transparent. By detecting the reflected light, Hb and CRP are measured.

The flow measuring units 6A and 6B are connected to the first and the second analysis portions 5A and 5B, respectively. The flow measuring units 6A and 6B measure the flow of the blood sample through the first and the second analysis portions 5A and 5B, respectively. Each of the flow measuring units includes a meandering flow path 61 and a plurality of electrodes 62. The meandering flow path 62 is provided to increase the length in the flow direction and has a sufficient volume. In this embodiment, the meandering flow path 62 serves as a storage capable of storing at least 50 µL of blood sample after the analysis at the first or the second analysis portion 5A or 5B. The plurality of electrodes 62 are arranged at a predetermined pitch in the flow direction of the meandering flow path 61. Each of the electrodes 62 has the substantially same structure as that of the electrode 51.

The blood analysis using the cartridge A will be described below.

First, referring to Fig. 1, blood as the sample liquid is introduced into the cartridge from the liquid introduction port 3 by using e.g. a dropper. Then, the cartridge A, into which blood is introduced, is mounted to an analyzer (not shown). Specifically, the cartridge is mounted by connecting the connector 8 to a connector (now shown) of the analyzer. In this process, the liquid introduction port 3 and the drains D1-D7 shown in Fig. 2 are connected to air discharge nozzles or air suction nozzles connected to a pump provided in the analyzer. In the analyzer, the connection between the pump and the air discharge nozzles or the air suction nozzles can be switched appropriately.

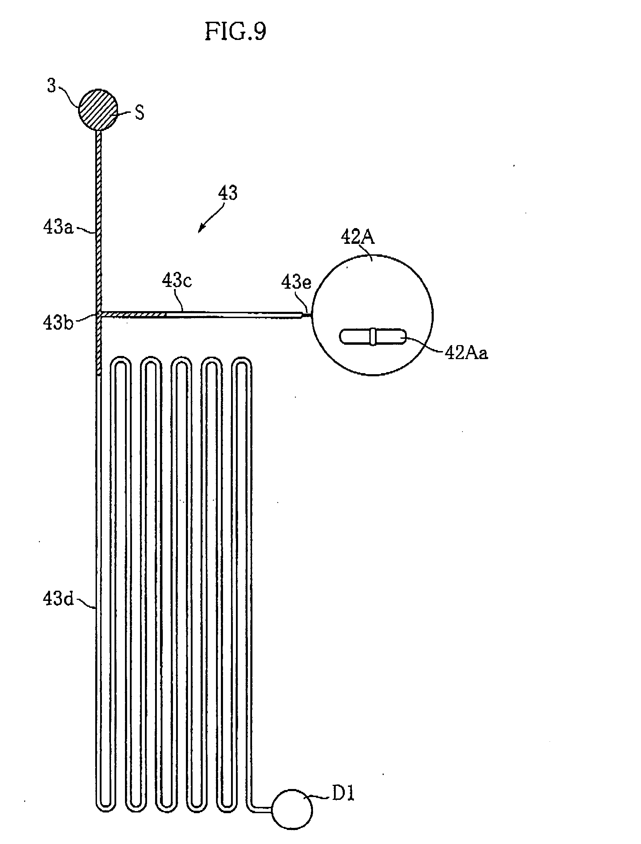

Then, the blood is measured by the blood measurer 43. This process will be described below with reference to Figs. 9-13. Since the main body 1 and the printed wiring board 2 have hydrophobic surfaces, the blood S introduced through the liquid introduction port 3 does not flow due to the capillary action but remains in the liquid introduction port. After the blood S is introduced, air is discharged through the liquid introduction port 3. As a result, as shown in Fig. 9, the blood S starts to flow from the liquid introduction port 3 to the measurement flow path 43c and the overflow path 43d through the introduction flow path 43a. Since the cross-sectional area of the measurement flow path 43c and that of the overflow path 43d are substantially equal to each other, the pressure drop resistance of the measurement flow path during the flow of the blood S is substantially equal to that of the overflow path. Thus, the blood S moves substantially the same distance through the measurement flow path 43c and the overflow path 43d.

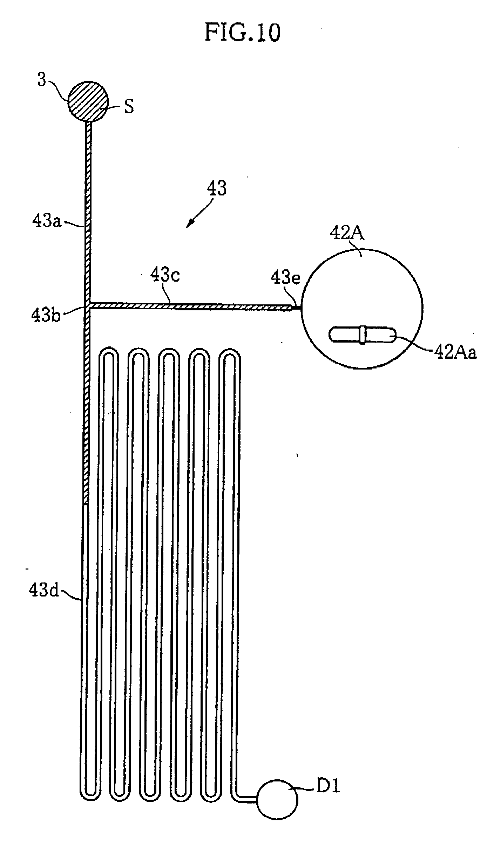

By continuing the air discharge, the measurement flow path 43c is filled with the blood S, as shown in Fig. 10. When the measurement flow path 43c is filled with the blood, the blood S is present in the overflow path 43d by an amount corresponding to the length of the measurement flow path.

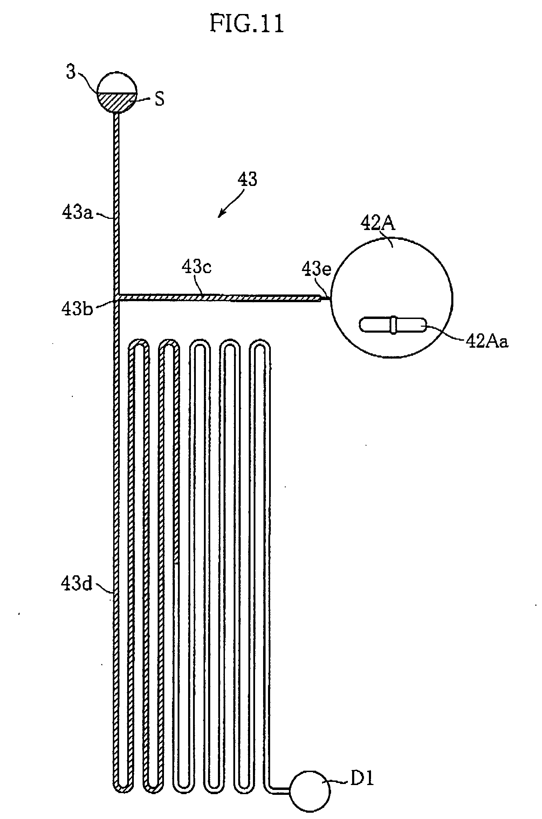

When the discharge is continued further from the state shown in Fig. 10, the state shown in Fig. 11 is obtained. Specifically, since the orifice 43e is provided on the downstream side of the measurement flow path 43c, the pressure drop resistance when the blood S flows is very large. On the other hand, the overflow path 43d has a uniform cross-sectional area in the flow direction, so that the pressure drop resistance is considerably smaller than that at the orifice 43e. Thus, with the blood S retained within the measurement flow path 43c, the blood S continues to flow through the overflow path 43d.

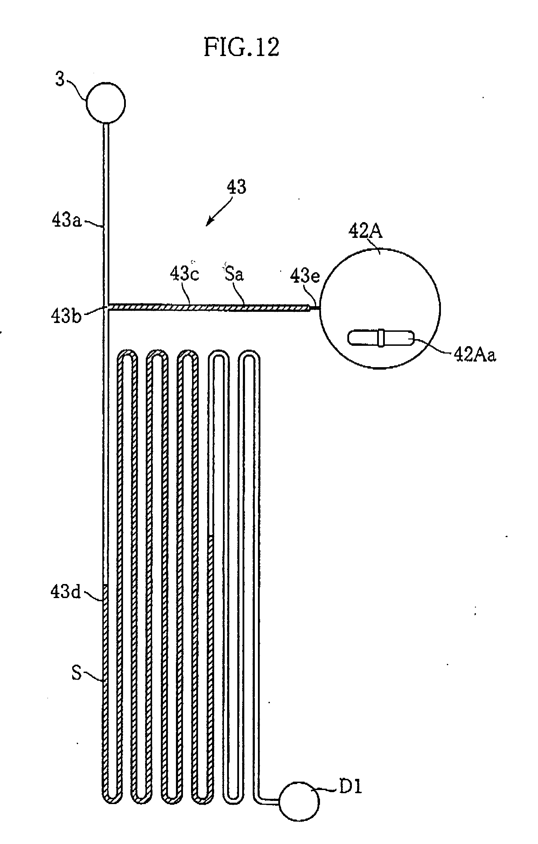

When the discharge is further continued, all the blood S flows out of the liquid introduction port 3, whereby the state shown in Fig. 12 is obtained. As shown in the figure, due to the continuation of the discharge, air is introduced, instead of the blood S, into the introduction flow path 43a and the upstream portion of the overflow path 43d. Thus, the blood Sa retained in the measurement flow path 43c is separated from the blood S. The amount of blood S injected into the liquid introduction port 3 is generally constant, so that the time taken from the start of air discharge shown in Fig. 9 until the state shown in Fig. 12 is obtained is generally constant. Thus, this time is measured using a timer provided in the analyzer, and the discharge is stopped after the lapse of this time.

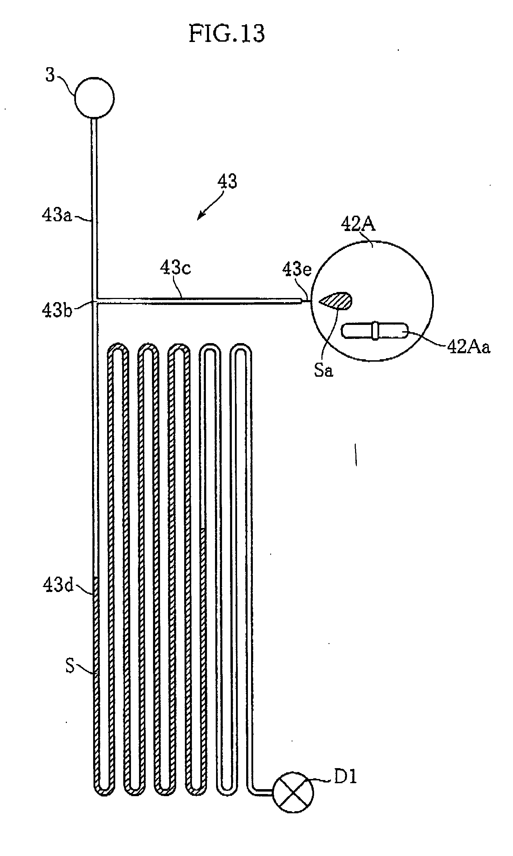

Then, as shown in Fig. 13, with the drain D1 closed by the analyzer, air is discharged again through the liquid introduction port 3. As a result, the blood Sa retained in the measurement flow path 43c flows into the first dilution tank 42A through the orifice 43e. By this process, the measurement of a predetermined amount of the blood Sa is completed, and the predetermined amount, i.e., about 0.5 µL of blood Sa is retained in the first dilution tank 42A.

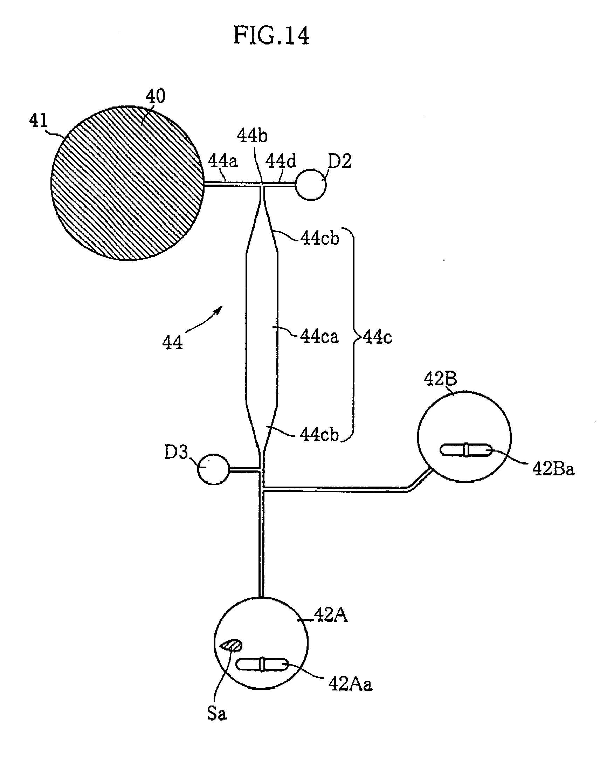

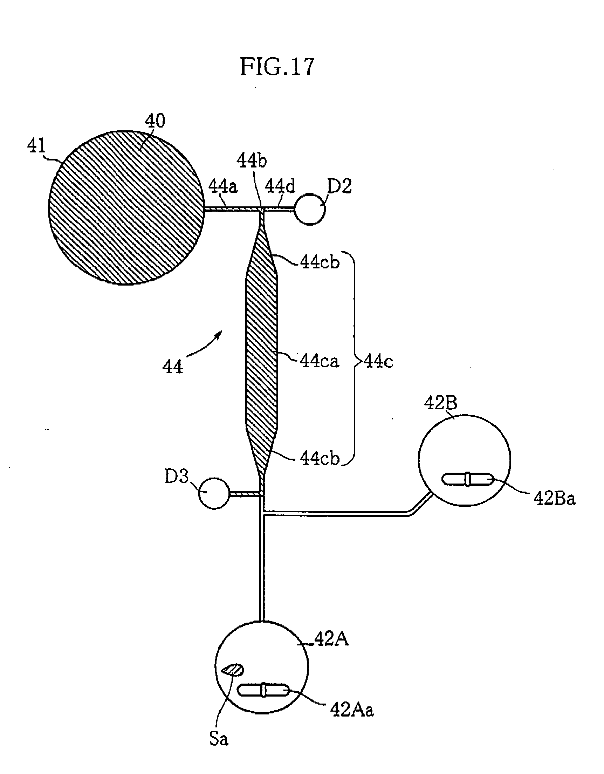

Then, the diluent 40 is measured by the diluent measurer 44. This process will be described below with reference to Figs. 14-18. Fig. 14 shows the state to start the measurement of the diluent 40. To provide this state, an aluminum bag (not shown) containing the diluent 40 is burst within the diluent tank 41 to make the diluent 40 ready to flow out. Since the main body 1 and the printed wiring board 2 have hydrophobic surfaces, the diluent 40 does not unduly flow out due to the capillary action even when the aluminum bag is burst.

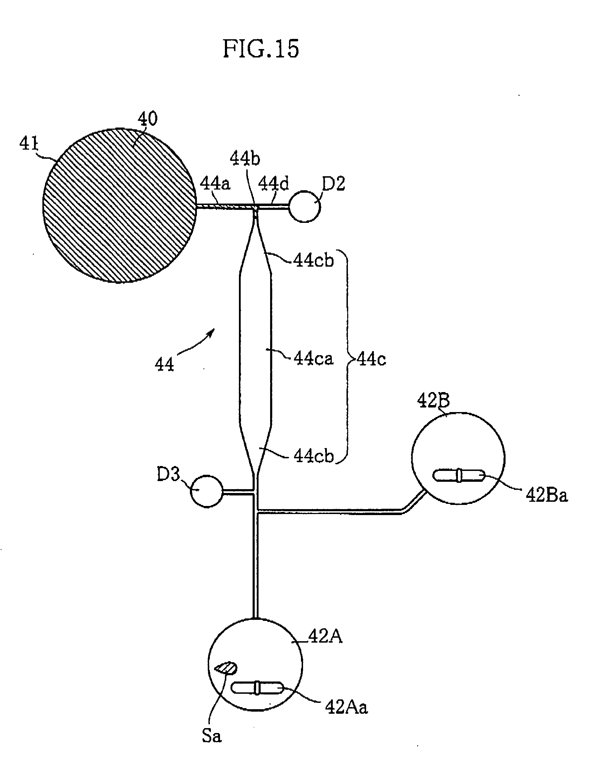

After the diluent 40 is made ready to flow out, the discharge of air from the diluent tank 41 is started by making the drain D2 closed and the drain D3 opened. As a result, as shown in Fig. 15, the diluent 40 is pushed out of the diluent tank 41 and flows into the measurement flow path 44c through the introduction flow path 44a.

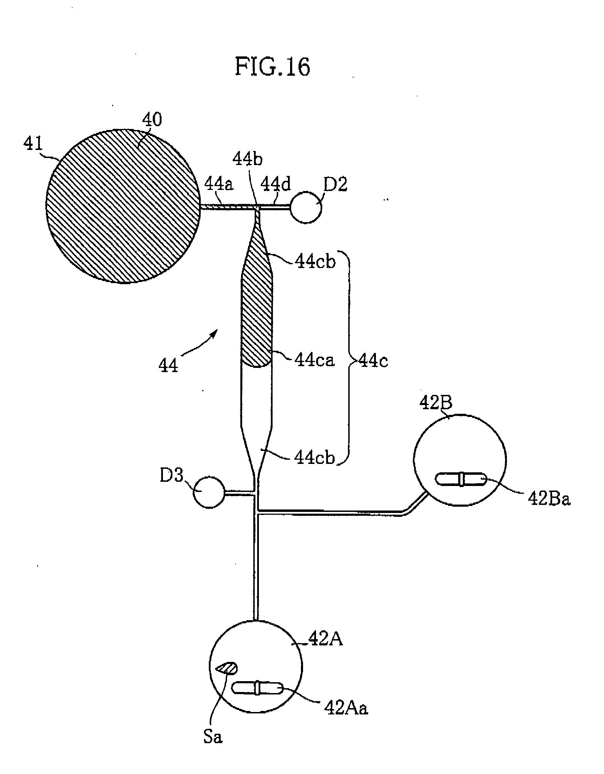

When the discharge is further continued, the state shown in Fig. 16 is obtained. The measurement flow path 44c includes a large cross-sectional portion 44ca on the downstream side of the tapered portion 44cb. As noted before, since the surface forming the large cross-sectional portion 44ca is hydrophobic, the surface tension to retain the diluent 40 within the upper portion in the figure acts on the diluent. Thus, the flow of diluent due to the capillary action does not occur. However, due to the motive force caused by the discharge, the diluent 40 gradually flows downward in the figure against the surface tension. By continuing the discharge, the diluent 40 fills the measurement flow path 44c and flows toward the drain D3. When the front of the diluent 40 reaches a portion before the drain D3, this fact is detected by electrical resistance means including an e.g. electrode (not shown) or an optical means including a reflection film (not shown). When this is detected, the discharge is stopped.

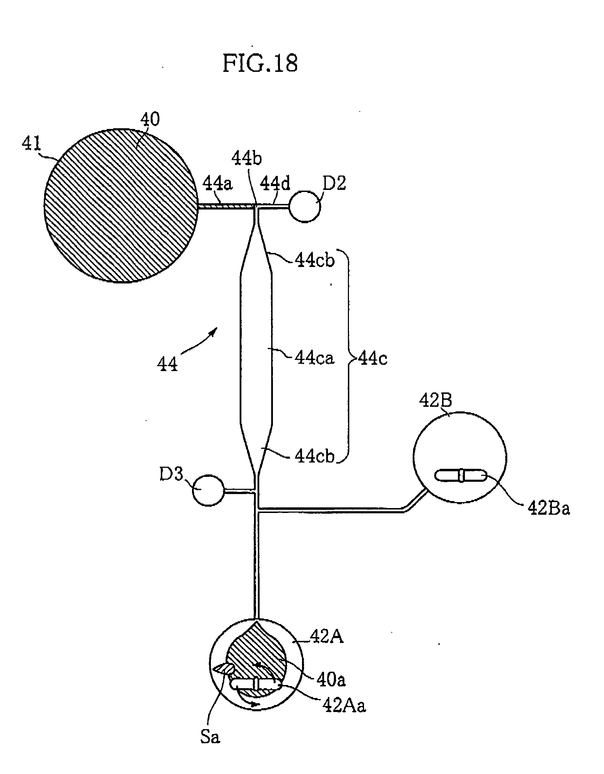

Then, as shown in Fig. 18, with the drain D3 and the drain D7 shown in Fig. 1 closed, air is discharged through e.g. the drain D2 shown in Fig. 18 or sucked through any of the drains positioned on the downstream side of the first dilution tank 42A. As a result, the diluent 40 retained in the measurement flow path 44c flows into the first dilution tank 42A. By this process, the measurement of the diluent 40 is completed, and a predetermined amount, i.e., about 50 µL of diluent 40a is retained in the first dilution tank 42A.

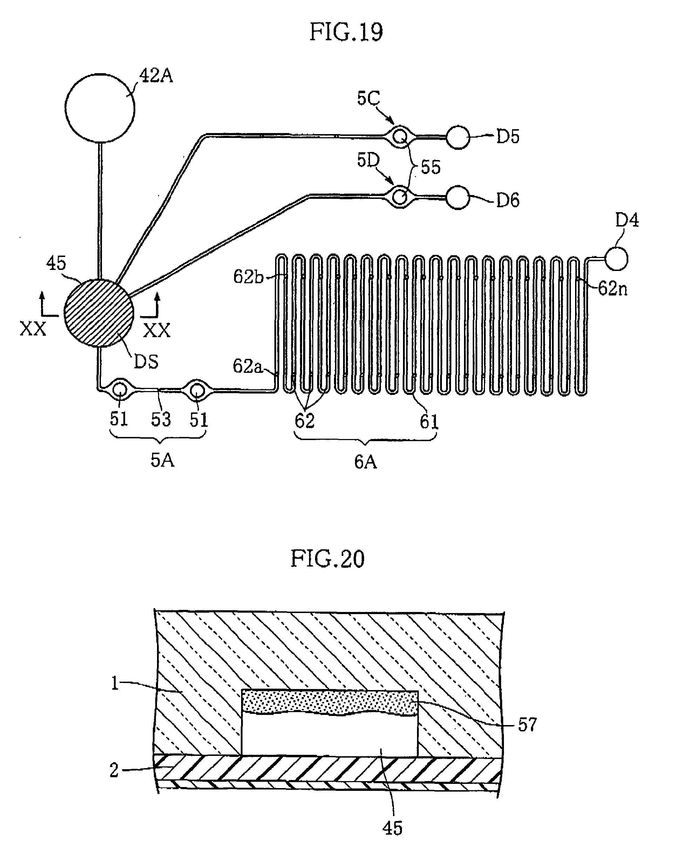

Then, about 0.5 µL of blood Sa and about 50 µL of diluent 40a are mixed within the first dilution tank 42A to provide blood sample as a 1: 100 diluted sample liquid. The mixing is performed using a stirrer 42Aa incorporated in the first dilution tank 42A. The stirrer 42Aa comprises a small piece of ferromagnetic material such as iron sealed in fluoroplastic such as Teflon (registered trademark of DuPont). The stirrer 42Aa is rotatable by a magnetic force generator provided in the analyzer to which the cartridge A is mounted. The blood Sa and the diluent 40a are mixed by the rotation of the stirrer. It is to be noted that, in Fig. 19, the illustration of the blood Sa and the diluent 40a is omitted. The above-described dilution is hereinafter referred to as the first dilution.

After the first dilution in the first dilution tank 42A is completed, the white blood cells are counted in the first analysis portion 5A, and Hb and CRP are measured in the third and the fourth analysis portions 5C and 5D. As shown in Fig. 1, the buffer tank 45 is connected to the first dilution tank 42A. The above-described 1:100 diluted blood sample is supplied to the buffer tank 45.

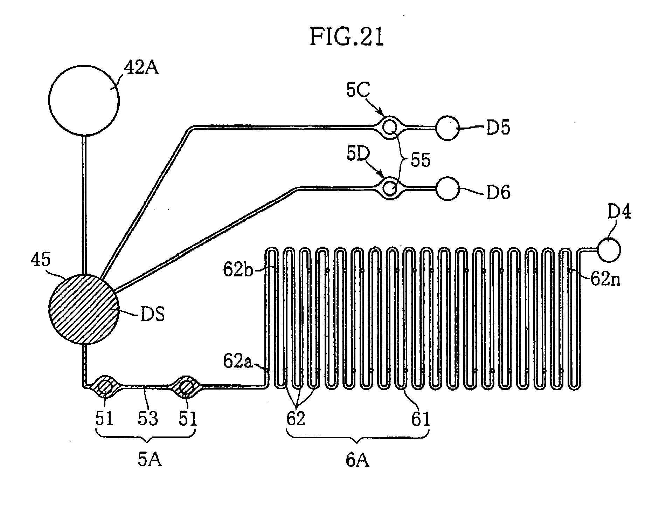

The process of counting the white blood cells in the first analysis portion 5A using part of the blood sample stored in the buffer tank 45 will be described below with reference to Figs. 19-24. This counting is performed using the first analysis portion 5A and the first flow measuring unit 6A arranged on the downstream side of the first analysis portion. Fig. 19 shows the state to start the counting of the white blood cells. In this state, the blood sample DS as the 1:100 diluted sample liquid is retained in the buffer tank 45. As shown in Fig. 20, a dry hemolytic agent 57 is applied to the buffer tank 45. The dry hemolytic agent 57 serves to hemolyze, i.e., destroy red blood cells in the blood sample. The hemolytic treatment is performed to eliminate the influence of red blood cells in counting the white blood cells. In this state, suction of air from e.g. the drain D4 is started. As a result, as shown in Fig. 21, the blood sample DS flows out of the buffer tank 45 to flow through the first analysis portion 5A.

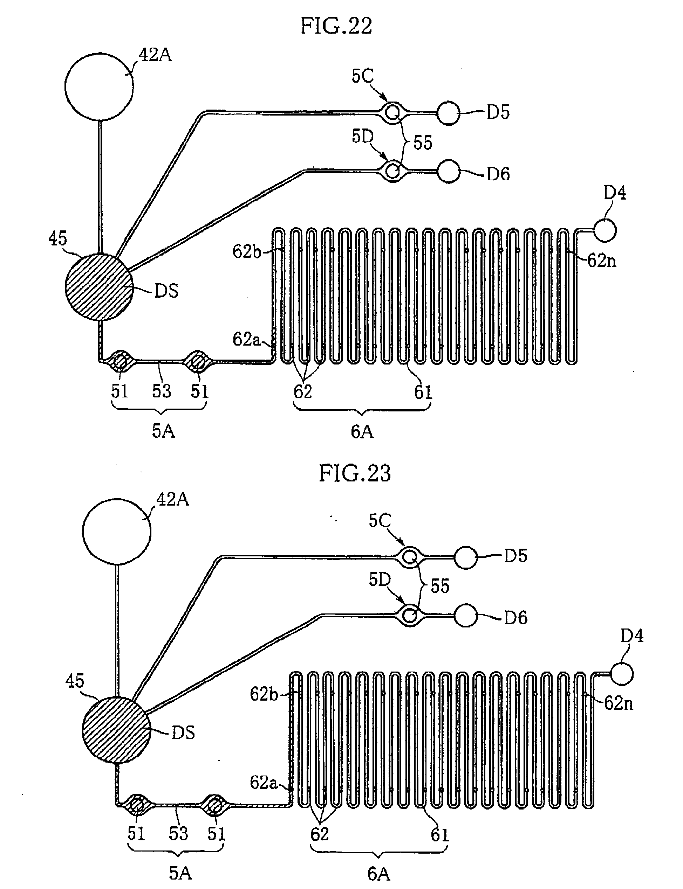

When the suction from the drain D4 is further continued, the front of the blood sample DS reaches the electrode 62a which is positioned on the most upstream side among the plurality of electrodes 62, as shown in Fig. 22. The fact that the front of the blood sample DS has reached the electrode 62a can be detected by monitoring the electrical conduction between the electrode 62a and the electrode 51, for example. Based on the detection, the counting of the white blood cells by the first analysis portion 5A is started. As noted before, since the minute hole 53 has a small width, the electrical resistance between the paired electrodes 51 instantaneously increases when a white blood cell passes through the minute hole. Thus, by performing time-series monitoring of the electrical resistance between the paired electrodes 51, pulses are generated correspondingly to the passage of white blood cells. The number of the pulses is integrated.

When the suction is continued while integrating the pulses, the front of the blood sample DS reaches the electrode 62b which is the second among the plurality of electrodes 62 from the upstream side, as shown in Fig. 23. The fact that the front of the blood sample has reached this electrode is detected by monitoring the electrical conduction between the electrodes 62a and 62b, for example. The amount of the blood sample DS which passes through the first analysis portion 5A during the period from when the front of the blood sample DS reaches the electrode 62a until the front reaches the electrode 62b is equal to the amount of the blood sample DS which can be retained between the electrodes 62a and 62b. Since the distance between the electrodes 62a and 62b along the flow direction is known, the amount of the blood sample DS which has passed through the first analysis portion 5A is found properly. Based on this amount and the number of pulses integrated, the number of white blood cells per unit volume of the blood S is determined properly.

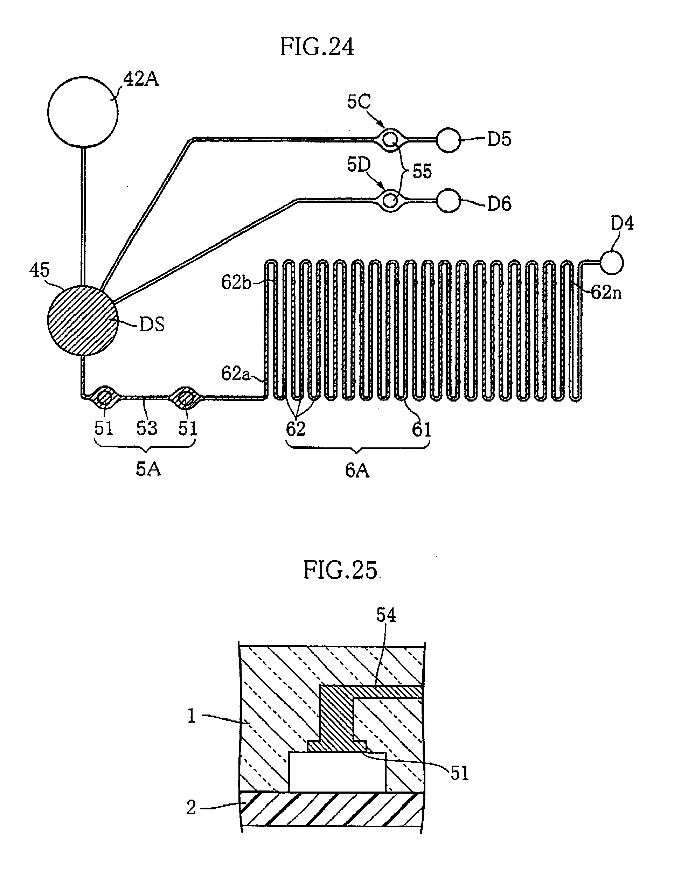

After the above-described process, the counting may be repeated while continuing the suction to increase the accuracy of the counting. In this embodiment, the first flow measuring unit 6A is provided with a plurality of electrodes 62. Therefore, the counting can be performed a plurality of times by storing the number of pulses every time the front of the blood sample DS reaches each of the electrodes 62 on the downstream side of the electrodes 62a and 62b. This is equivalent to counting the white blood cells using a larger amount of blood sample DS, so that the accuracy of counting is enhanced. The counting by the first analysis portion 5A may be stopped when it is detected that the front of the blood sample DS has reached the electrode 62n located on the most downstream side among the electrodes 62, as shown in Fig. 24. As will be understood from the figure, when the counting by the first analysis portion 5A is finished, the blood sample DS after the analysis remains within the meandering flow path 61.

The analysis by the third and the fourth analysis portions 5C and 5D may be performed by performing suction from the drains D5 and D6 to cause the blood sample DS to reach the respective reflection films 55 of the third and the fourth analysis portions 5C and 5D after the counting by the first analysis portion 5A is finished. As shown in Fig. 8, the blood sample DS reacts with the reagent 56 to become ready for the analysis of Hb or CRP. In this state, light is directed from the analyzer onto each of the reflection films 55 through the main body 1, and the reflected light is received by e.g. a light receiving element provided in the analyzer through the main body 1. By processing the received light appropriately, the analysis of Hb and CRP is performed. Unlike this embodiment, a substrate made of a transparent material may be employed instead of the printed wiring board 2. In this case, the reflection films 55 are unnecessary, and each of the third and the fourth analysis portions 5C and 5D is sandwiched between the main body 1 and the substrate both of which are transparent. Thus, the analysis of Hb and CRP is performed by the transmission measurement.

The process of counting the red blood cells by the second analysis portion 5B will be described below. Before the counting process, the second dilution is performed by the diluter 4 shown in Fig. 1. The second dilution is performed similarly to the first dilution described with reference to Figs. 9-18. In the first dilution, the blood S is diluted about 1:100 with the diluent 40. In the second dilution, on the other hand, the 1:100 diluted blood sample DS obtained by the first dilution is further diluted about 1:100 with the diluent 40. Thus, the blood sample obtained by the second dilution corresponds to 1:10000 diluted blood S. To perform this dilution, with the 1:100 diluted blood sample DS retained in the first dilution tank 42A, about 50 µL of blood sample DS is supplied to the second dilution tank 42B by utilizing the measurement flow path 46 shown in Fig. 1. The measurement of the blood sample DS utilizing the measurement flow path 46 is performed in a substantially same manner as the measurement process described with reference to Figs. 9-13. On the other hand, in the measurement by the diluent measurer 44 described with reference to Figs. 14-18, suction is performed from the drain D7, with the drains D1, D3, D4, D5, D6 and D8 shown in Fig. 1 closed and the drain D2 opened. By this process, about 50 µL of diluent 40 is supplied to the second dilution tank 42B. In the second dilution tank 42B, 5 µL of blood sample DS is diluted substantially 1:10000 with the 50 µL of diluent 40. In this dilution, the stirrer 42Ba is rotated by utilizing magnetic force to promote the mixing of the blood sample DS and the diluent 40.

The red blood cells are counted by the second analysis portion 5B using the 1:10000 diluted blood sample obtained by the above-described dilution process. The counting is performed in a substantially same manner as the counting performed by the first analysis portion 5A. The measurement of the flow utilizing the second flow measuring unit 6B is performed similarly to that utilizing the first flow measuring unit 6A.

The advantages of the cartridge A will be described below.

According to this embodiment, the measurement of the blood S by the blood measurer 43, the measurement of the diluent 40 by the diluent measurer 44 and the measurement of the blood sample DS are properly performed without the need for rotating e.g. a rotary member including a measurement flow path. This is because the blood measurer 43 and the diluent measurer 44 comprise flow paths connected through a T-j unction. To manufacture such a bloodmeasurer 43 and diluent measurer 44 is easier than to manufacture the above-described rotary member, so that the manufacturing efficiency is enhanced. Since a rotary member is not rotated in the measurement process, there is no possibility of liquid leakage. Thus, a disposable cartridge A is provided which is relatively easy to manufacture and usable in a hygienic condition.

Further, the blood measurer 43 and the diluent measurer 44 precisely measure the amount of the blood S, the diluent 40 and the blood sample DS. Thus, the accuracy of analysis by the first through the fourth analysis portions 5A, 5B, 5C and 5D is enhanced.

The stirrer 42Aa and 42Ba are rotated respectively in the first dilution tank 42A and the second dilution tank 42B. Therefore, as shown in e.g. Fig. 18, the blood Sa and the diluent 40a are physically agitated in the first dilution tank 42A, and hence, sufficiently mixed. Similarly, the blood sample DS and the diluent 40a are reliably mixed within the second dilution tank 42B. This also enhances the accuracy of analysis by the first through the fourth analysis portions 5A, 5B, 5C and 5D.

By utilizing the dry hemolytic agent 57 applied to the buffer tank 45, the influence of red blood cells is properly eliminated, so that the counting of e.g. white blood cells is performed precisely. The dry hemolytic agent 57 by itself is a solid and contains little moisture. Thus, the cartridge A can be kept dry before use, which is advantageous for reducing the weight and enhancing the hygienic condition of the cartridge A.

According to this embodiment, two-stage dilution is performed using the first and the second dilution tanks 42A and 428. Thus, two kinds of dilution of a relatively high dilution ratio of 1:100 and 1:10000 are possible. Thus, the counting of white blood cells and the counting of red blood cells, which largely differ from each other in proper dilution ratio, can be performed collectively. The provision of the blood measurer 43 and the diluent measurer 44 ensures dilution at the proper dilution ratio. Further, the measurement using the large cross-sectional portion 44ca is particularly effective for the dilution at a high dilution ratio.

The flow measurement using the first and the second flow measuring units 6A and 6B is very easy and accurate. This not only ensures accurate counting of red blood cells and white blood cells but also eliminates the need for the provision of a mechanism for keeping constant flow in the analyzer, which is advantageous for simplifying the analyzer.

Since the printed wiring board 2 formed with through-holes 52 is used, the surface portions other than the electrodes 51 and 62 are flat. This is advantageous for liquid-tightly bonding the main body 1 and the printed wiring board 2 together.

Fig. 25 is an enlarged view showing a portion of a variation of the cartridge according to the present invention. In this variation, the main body 1 is provided with a lead 54 formed integrally by insert molding. An end of the lead 54 which is exposed at a flow path serves as an electrode 51. The other end of the lead 54 is exposed from the main body 1 to form a connector 8 shown in Figs. 1 and 2. By employing this arrangement, the main body 1 and the electrode 51 are formed collectively without performing the printing just for forming the electrode 51, so that the manufacturing efficiency is enhanced.

The cartridge according to the present invention is not limited to the foregoing embodiments. The specific structure of each part of the cartridge according to the present invention may be varied in design in many ways.

The material of the main body 1 is not limited to a transparent one but may be partially opaque. In this case, at least the portion corresponding to the optical analysis portion is made transparent. Although the use of a printed wiring board is preferable for thickness reduction, a rigid substrate may be used. As the means for detecting the diluted sample liquid, an optical means may be employed instead of the means including an electrode.

The ratio of dilution by the diluter can be increased by appropriately setting the size of a flow path, for example. The dilution is not limited to the two-stage dilution. For instance, the dilution may be performed only once or three times or more.

The cartridge according to the present invention is not limited to the use for the analysis of blood and may be used for the analysis of various kinds of sample liquid. The cartridge according to the present invention may not include an analysis portion and may be designed just to prepare diluted sample liquid for counting blood cells, for example.

## Claims

1. A cartridge to be mounted to a separate apparatus, the cartridge comprising:
a liquid introduction port for introducing a sample liquid; and
a diluter including a diluent tank for storing a diluent for diluting the sample liquid, a sample liquid measurer for separating a predetermined amount of liquid from the sample liquid introduced from the liquid introduction port, and at least one dilution tank for mixing at least part of the sample liquid and at least part of the diluent;
wherein the sample liquid measurer includes an introduction flow path extending from the liquid introduction port, and a measurement flow path and an overflow path both connected to the introduction flow path via a branch portion,
wherein the measurement flow path extends toward the dilution tank.

2. The cartridge according to claim 1, wherein the dilution tank incorporates a stirrer.

3. The cartridge according to claim 1, wherein an orifice intervenes between the measurement flow path and the dilution tank.

4. The cartridge according to claim 3, wherein at least part of the overflow path extending from the branch portion and having a length corresponding to a length of the measurement flow path has a cross-sectional area which is equal to or smaller than a cross-sectional area of the measurement flow path.

5. The cartridge according to claim 1, wherein the diluter includes a diluent measurer for separating a predetermined amount from the diluent stored in the diluent tank.

6. The cartridge according to claim 5, wherein the diluent measurer includes a measurement flow path including a large cross-sectional portion and a pair of tapered portions connected to opposite ends of the large cross-sectional portion in a flow direction.

7. The cartridge according to claim 1, wherein the diluter includes a first and a second dilution tanks;
the first dilution tank is connected to a flow path through which the sample liquid introduced from the liquid introduction port flows in and a flow path through which the diluent from the diluent tank flows in; and
the second dilution tank is connected to a flow path through which the sample liquid diluted in the first dilution tank flows in and a flow path through which the diluent from the diluent tank flows in.

8. The cartridge according to claim 7, further comprising a buffer tank arranged downstream from the first dilution tank;
wherein a dry hemolytic agent is applied to the buffer tank.

9. The cartridge according to claim 1, further comprising at least one analysis portion for analyzing a particular component contained in the sample liquid diluted by the diluter, the cartridge thereby serving as an analyzer cartridge to be mounted to an analyzer for analyzing the particular component contained in the sample liquid.

10. The cartridge according to claim 9, further comprising at least one storage for storing the diluted sample liquid after the analysis.

11. The cartridge according to claim 9, wherein the cartridge includes a first analysis portion for analyzing the sample liquid diluted in the first dilution tank and a second analysis portion for analyzing the sample liquid diluted in the second dilution tank.

12. The cartridge according to claim 9, further comprising a flow measuring unit for measuring amount of the diluted sample liquid passed through the analysis portion.

13. The cartridge according to claim 12, wherein the flow measuring unit includes a meandering flow path and at least two diluted-sample-liquid detectors arranged in the meandering flow path at positions spaced from each other in the flow direction.

14. The cartridge according to claim 13, wherein the diluted-sample-liquid detectors include an electrode.

15. The cartridge according to claim 13, wherein the meandering flow path serves as the storage.

16. The cartridge according to claim 9, wherein the analysis portion includes an electrical resistance type analysis portion including a hole and a pair of electrodes spaced from each other via the hole.

17. The cartridge according to claim 9, wherein the analysis portion includes an optical analysis portion including a reflection film, a light transmitting portion and a reagent applied to the reflection film or the light transmitting portion.

18. The cartridge according to claim 1, wherein flow paths through which the sample liquid and the diluted sample liquid flow comprise a hydrophobic surface having a contact angle with water of not less than 60 degrees.

19. The cartridge according to claim 18, wherein the flow paths include one in which width/depth is not less than one and not more than five.

20. The cartridge according to claim 1, further comprising a main body and a printed wiring board bonded to the main body;
wherein the main body is formed with a plurality of recesses or grooves; and
wherein the recesses or grooves are covered by the printed wiring board to form a plurality of flow paths or tanks.

21. The cartridge according to claim 1, further comprising a main body including a plurality of recesses or grooves;
an electrode integrally formed in the main body by insert molding to be exposed at the recesses or the grooves; and
a cover bonded to the main body;
wherein the recesses or grooves are covered by the cover to form a plurality of flow paths or tanks.

22. The cartridge according to claim 1, wherein the sample liquid is blood.

23. The cartridge according to claim 22, wherein the particular component is blood cells such as red blood cells, white blood cells or blood platelets.

24. The cartridge according to claim 22, wherein the particular component is hemoglobin or C-reactive protein.
